(19) Europäisches Patentamt
European Patent Office
Office européen des brevets

(11) EP 3 187 737 A1

(12) **EUROPEAN PATENT APPLICATION**
published in accordance with Art. 153(4) EPC

(43) Date of publication:
**05.07.2017 Bulletin 2017/27**

(21) Application number: **15836141.0**

(22) Date of filing: **21.08.2015**

(51) Int Cl.:
***F15B 11/06*** *(2006.01)* ***F15B 15/14*** *(2006.01)*
***F16L 55/00*** *(2006.01)*

(86) International application number:
**PCT/JP2015/073528**

(87) International publication number:
**WO 2016/031711 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.08.2014 JP 2014170625**

(71) Applicant: **Tokyo Institute of Technology**
**Tokyo 152-8550 (JP)**

(72) Inventors:
- **KAGAWA Toshiharu**
  **Tokyo 152-8550 (JP)**
- **YOUN Chongho**
  **Tokyo 152-8550 (JP)**

(74) Representative: **Schröer, Gernot H.**
**Meissner Bolte Patentanwälte**
**Rechtsanwälte Partnerschaft mbB**
**Bankgasse 3**
**90402 Nürnberg (DE)**

(54) **PIPING FOR PNEUMATIC SYSTEM AND PNEUMATIC ACTUATOR**

(57) A pipe 2 is employed in a pneumatic system. At least a portion 6 of an interior space 4 of the pipe 2 is filled with a metal wire 8. At least the portion 6 may be configured as an end of the pipe 2.

FIG. 1

4
8
6
2

EP 3 187 737 A1

## Description

[TECHNICAL FIELD]

The present invention relates to a pipe employed in a pneumatic system and a pneumatic actuator.

[BACKGROUND ART]

With a pneumatic system, in a case in which a pressurizing operation (inflow operation) and a depressurizing operation (outflow operation) are alternately and repeatedly performed, this leads to the occurrence of condensation in a pipe end or otherwise in a pneumatic actuator, resulting in a problem of remaining water droplets. Such remaining water droplets have adverse effects on the device operation characteristics, device lifespan, and device reliability. Accordingly, there is a need to provide a measure to solve such a problem (see non-patent document 1).

[Related Art Documents]

[Patent Documents]

[Non-patent document 1]

Method employed in a pneumatic system for suppressing condensation, [online], SMC Corporation, [Retrieved on July 8, 2014], Internet <URL: http://www.smcworld.com/docs/technological_material/ja/pdf/341-P-01-11B.pdf>

[DISCLOSURE OF THE INVENTION]

[PROBLEM TO BE SOLVED BY THE INVENTION]

Examples of such measures to solve such a condensation problem include: a method in which the moisture of the supply air is further reduced, a method in which the material of the pipe is modified, a method employing a bypass line, a method employing a quick exhaust valve, and the like.

The present invention has been made in view of such a situation. Accordingly, it is an exemplary purpose of an embodiment of the present invention to provide a pipe and a piston structured to suppress variation in the temperature in the pipe, and/or to suppress condensation.

[MEANS TO SOLVE THE PROBLEM]

An embodiment of the present invention relates to a pipe employed in a pneumatic system. The pipe is structured such that at least a portion of an interior space thereof is filled with a wire-shaped metal material, i.e., a metal wire.

With such an embodiment, the metal wire functions as a heat storage member, which allows temperature variation to be suppressed in the pipe interior space. Thus, such an arrangement is capable of suppressing condensation. In addition, by employing such a metal wire as a filler, such an arrangement provides an increased surface area while preventing an increase in pressure loss. This suppresses temperature variation in the pipe interior space and/or suppresses condensation.

It should be noted that, in the present specification, examples of such a "pipe" include: (i) a pipe employed in a pneumatic system configured to transmit pressure between a given portion and a different portion; and (ii) an attachment having a small length, which is configured to connect a given pipe and another pipe, to change the direction of the pipe, or to prevent condensation or to prevent temperature variation.

Also, the surface area of the metal material per unit volume of air may be larger than $4 \times 10^2$ [$m^{-1}$].

Also, the wire-shaped metal material may have a diameter of 100 $\mu$m or less. As the diameter of such a metal material becomes smaller, the surface area thereof becomes larger, which is preferable. However, such a wire-shaped metal material may have a diameter of 1 $\mu$m or more from the viewpoint of mechanical strength, cost, commercial availability, and the like.

Also, the aforementioned portion of the interior space of the pipe may correspond to an end of the pipe.

The water droplets readily remain at the end of the pipe. Thus, by providing such a portion with such a metal wire as a filler, such an arrangement is capable of suppressing condensation.

Also, the aforementioned portion of the interior space of the pipe may correspond to a portion at which large pressure variation occurs. Such an arrangement is capable of suppressing temperature variation due to variation in pressure.

The aforementioned portion may be filled with the metal wire with a fill ratio (volume ratio) of 1% to 8%. Such an arrangement provides an advantage of suppressing condensation while reducing the pressure loss tradeoff.

Another embodiment of the present invention relates to a pneumatic actuator. The pneumatic actuator comprises a cylinder filled with a wire-shaped metal material.

Yet another embodiment of the present invention relates to a pipe or otherwise a pneumatic actuator employed in a pneumatic system. At least a portion of the interior space of the pipe or the pneumatic actuator is filled with a carbon-based material such as a graphite material or the like.

Also, the interior space of the pipe may be filled with a porous metal material instead of or in addition to such a metal wire.

It should be noted that any combination of the aforementioned components or any manifestation of the present invention may be mutually substituted between a method, apparatus, and so forth, which are also effective as an embodiment of the present invention.

[ADVANTAGE OF THE PRESENT INVENTION]

With an embodiment of the present invention, such an arrangement is capable of suppressing condensation.

[BRIEF DESCRIPTION OF THE DRAWINGS]

Fig. 1 is a cross-sectional view of a pipe according to an embodiment;
Fig. 2 is a diagram showing the operation of a pneumatic system including the pipe shown in Fig. 1;
Figs. 3A and 3B are diagrams respectively showing the measurement results of temperature variation accompanying pressure variation obtained in a case of employing a pipe filled with a metal wire and in a case of employing a pipe having no metal wire as a filler;
Fig. 4 is a diagram showing the relation between the temperature T and the amount of saturated water vapor amount $\alpha$; and
Figs. 5A and 5B are diagrams each showing the relation between the copper wire fill ratio and the weight of remaining water droplets.

[BEST MODE FOR CARRYING OUT THE INVENTION]

Description will be made below regarding preferred embodiments according to the present invention with reference to the drawings. The same or similar components, members, and processes are denoted by the same reference numerals, and redundant description thereof will be omitted as appropriate. The embodiments have been described for exemplary purposes only, and are by no means intended to restrict the present invention. Also, it is not necessarily essential for the present invention that all the features or a combination thereof be provided as described in the embodiments.

[Configuration]

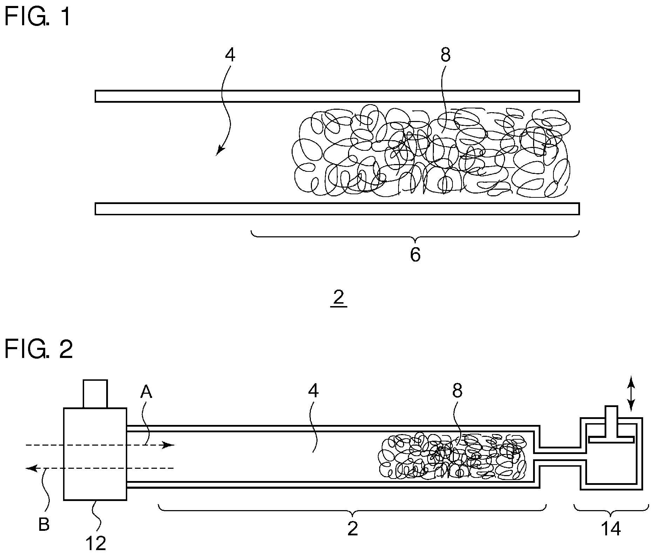

Fig. 1 is a cross-sectional view of a pipe 2 according an embodiment. The pipe 2 is employed in a pneumatic system. The pipe 2 is configured as a resin tube, for example. At least a portion 6 of a pipe interior space 4 is filled with a metal wire 8 (which will be referred to as the "filled space"). As the material of the metal wire 8, a material having high thermal conductivity may preferably be employed. Specific examples of such a material include copper, aluminum, silver, and gold. From the cost viewpoint, copper may preferably be employed. In contrast, the material of the pipe 2 is not restricted in particular. Examples of such a material of the pipe include metal materials in addition to resin materials. Also, the metal wire 8 may preferably be configured to have a diameter of several $\mu$m to several hundred $\mu$m. More specifically, such a metal wire to be employed may preferably be configured to have a diameter of 20 $\mu$m to 50 $\mu$m. Also, as another embodiment, such a metal wire to be employed may preferably be configured to have a diameter of 1 $\mu$m to 100 $\mu$m.

A space involving large pressure variation may preferably be selected as the filled space 6 to be filled with the metal wire 8. From another viewpoint, an end portion of the pipe 2 may preferably be selected as the filled space 6. More specifically, an end portion of the pipe 2 farther from an air pressure source may preferably be selected as the filled space 6.

[Mechanism]

The above is the structure of the pipe 2. Next, description will be made regarding the mechanism thereof. Fig. 2 is a diagram showing the operation of a pneumatic system including the pipe 2 shown in Fig. 1. For example, the pneumatic system 10 includes an electromagnetic valve 12 and a pneumatic actuator (pneumatic cylinder) 14 connected via the pipe 2.

The electromagnetic valve 12 is configured to be switchable between an air supply mode and an air exhaust mode. When the electromagnetic valve 12 is opened toward an air supply side port, compressed air flows into the pipe interior space 4 of the pipe 2 in a low-pressure state (indicated by the arrow A in the drawing). In this stage, the air in the pipe interior space 4 is compressed, leading to the potential to raise the temperature of the air. Such an increase in the temperature is absorbed by the metal wire 8, and the thermal energy is stored by the metal wire 8.

Subsequently, when the electromagnetic valve 12 is opened toward the air exhaust side port, the compressed air stored in the pipe interior space 4 is suddenly discharged (indicated by the arrow B in the drawing). This leads to a sudden drop in the pressure in the pipe interior space 4 due to adiabatic expansion, resulting in a sudden reduction in the temperature. If the temperature thus lowered becomes lower than the dew point, this results in vapor generation.

With such an arrangement, the thermal energy is stored in the metal wire 8 in the immediately previous step in the cycle. Accordingly, the thermal energy is discharged from the metal wire 8 to the air, thereby suppressing a reduction in the air temperature. In other words, it can be understood that the air expansion results in a reduction in the temperature of the metal wire 8.

As described above, by configuring the pneumatic system 10 such that the interior space of the pipe 2 is filled with the metal wire 8, which is operated to repeatedly perform such a cycle of the air supply step and the air exhaust step, such an arrangement is capable of suppressing variation in the temperature. By suppressing variation in the temperature, such an arrangement provides an advantage of suppressing degradation due to temperature variation.

Furthermore, such an arrangement is capable of preventing the temperature in the pipe interior space from becoming lower than the dew point, thereby suppressing condensation. This suppresses the adverse effects of water droplets on the device operation characteristics, the device lifespan, and device reliability.

[Experiment results: Temperature variation suppression effect]

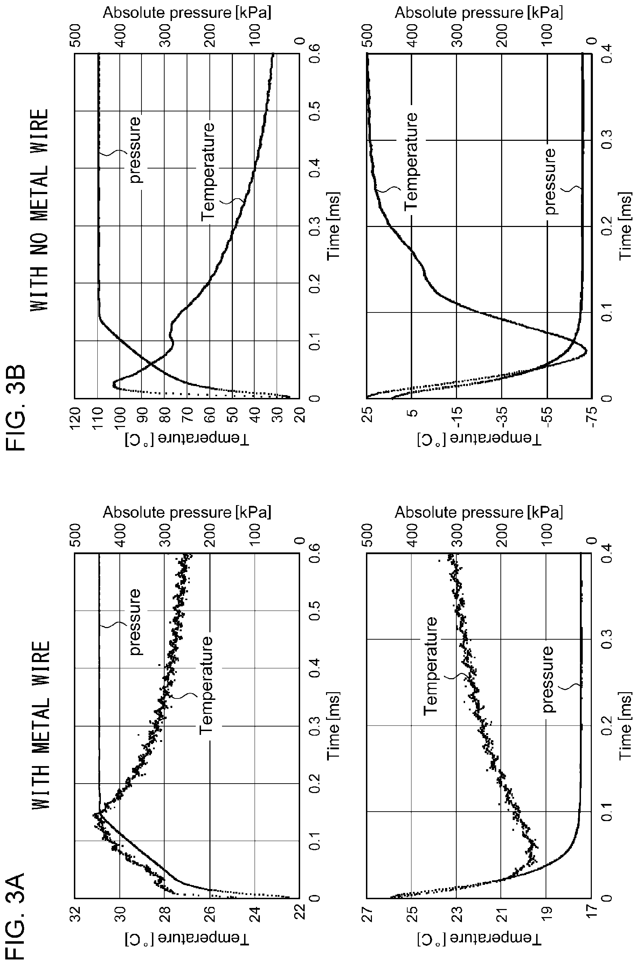

Figs. 3A and 3B respectively show measurement results of temperature variation due to pressure variation in a case of employing the pipe 2 filled with the metal wire 8 and in a case of employing a pipe filled with no metal wire. The graph in the upper region in each drawing shows the temperature measurement result when the pressure was raised. The graph in the lower region in each drawing shows the temperature measurement result when the pressure was lowered.

The pipe 2 employed in the experiment had an inner diameter of 5 mm, an outer diameter of 8 mm, and a length of 350 mm. The metal wire 8 was configured as a copper wire having a diameter of 20 $\mu$m. The interior space of the pipe 2 was filled with the metal wire 8 such that the region of the metal wire 8 extended over a length of 100 mm from the end of the pipe 2. The metal wire 8 was arranged as such a filler having a weight of 1.04 g and a fill ratio (volume ratio) of 5.91%. The pressure in the pipe interior space 4 was changed in a range between 20 kPa and 450 kPa (absolute value) in a period of 20 seconds. Temperature variation was measured using a K-type thermocouple and a thermocouple temperature converter (amplifier) having a response speed of 0.5 ms or less. It should be noted that the experiment was performed at a room temperature of 26°C, a humidity of 54%, and an atmospheric pressure of 1001 hPa on a clear day.

First, description will be made with reference to Fig. 3B regarding temperature variation in a case of employing the pipe filled with no metal wire 8. In the pressurizing step, the temperature was raised to 100°C or more. Conversely, in the depressurizing step, the temperature was lowered to the vicinity of $T_{MIN}$ = -60°C. Accordingly, in a cycle in which the pressurizing step and the depressurizing step were alternately and repeatedly performed, the temperature of the pipe interior space varied in a range between -60°C and 100°C.

Next, description will be made with reference to Fig. 3A regarding a case of employing the pipe 2 filled with the metal wire 8. By employing the metal wire 8 as a filler, such an arrangement is capable of suppressing temperature variation in a range of 6 to 7°C in both the pressurizing step and the depressurizing step. As described above, by employing the metal wire 8 as a filler, such an arrangement provides a marked effect for suppressing temperature variation.

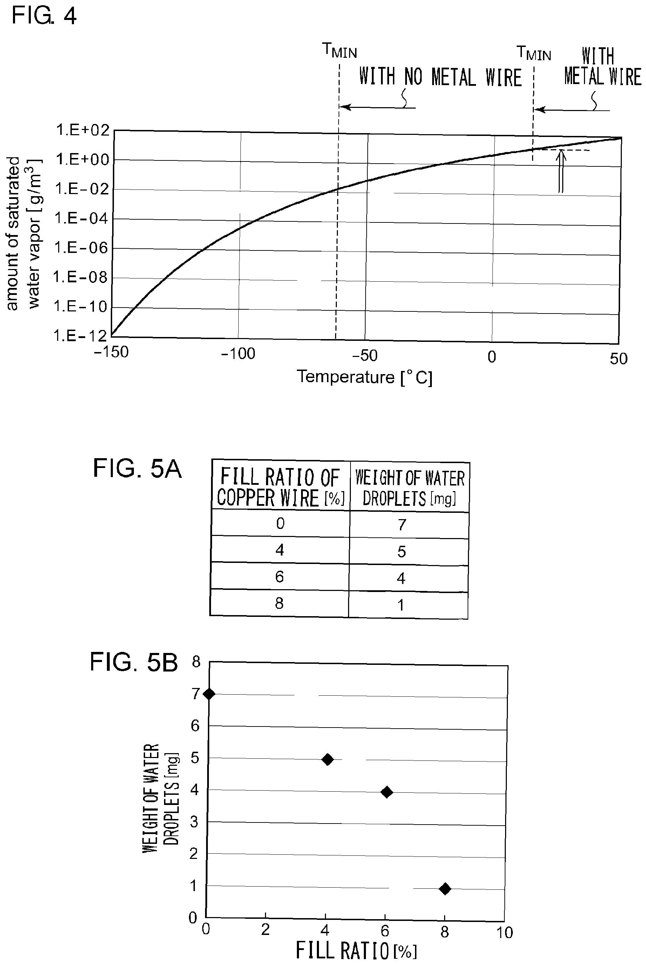

In addition, in a case in which the metal wire 8 is employed as a filler, such an arrangement is capable of relaxing a minimum value $T_{MIN}$ of the temperature of the pipe interior space on the order of 19°C in the depressurizing step, thereby providing an increased dew point. Thus, such an arrangement has the effect of suppressing the conditions for condensation. Using the Tetens equation and the equation of state, the saturation water vapor pressure E and the saturation water vapor amount $\alpha$ are represented by the following Expressions. Fig. 4 is a diagram showing the relation between the temperature T and the saturation water vapor amount $\alpha$.

$$E = 6.11 \times 10^{2+7.5\times T/(237.3 + T)}$$

$$\alpha(T) = E \times 10^3/(461.5 \times (T + 273.15))$$

In a case in which the metal wire 8 is not employed as a filler, such an arrangement involves a minimum temperature $T_{MIN}$ of -60°C, which leads to a saturated water vapor amount of 0.01 g/$m^3$. In contrast, in a case in which the metal wire 8 is employed as a filler, such an arrangement provides a minimum temperature $T_{MIN}$ of 19°C. Such an arrangement provides a saturated water vapor amount of 10 g/$m^3$, which is three orders of magnitude greater than that in a case in which the metal wire 8 is not employed as a filler. This shows that, by employing the metal wire 8 as a filler, such an arrangement is capable of suppressing condensation.

[Experiment results: Condensation suppression effect]

Next, an experiment was performed for evaluating the effect of suppressing condensation. The pipe 2 employed in the experiment was configured as a resin pipe having an inner diameter of 5 mm and having a sealed end. As described above, the pipe 2 was configured such that its one end was sealed in order to simulate the effect of the pneumatic actuator (cylinder piston). With such an arrangement, the air supply operation and the air exhaust operation were performed via the other end in order to generate pressure variation in the pipe interior space 4. The air employed in this experiment had a relative humidity of 8% (at 20°C at atmospheric pressure). A cycle in which the pressure of the pipe interior space was changed from 500 kPa (G) to a vacuum pressure of -80 kPa was repeated, following which the weight of water droplets that were generated and remained in the pipe interior space was measured by means of an electronic scale. As the metal wire 8, a copper wire having a diameter of 50 μm was employed. The experiment was made employing such a metal wire 8 with various fill ratios, i.e., with fill ratios of 0%, 4%, 6%, and 8%.

Figs. 5A and 5B are diagrams each showing the relation between the copper wire fill ratio and the weight of remaining water droplets. In a case in which the copper wire is employed as a filler with a fill ratio of 4%, such an arrangement provides a reduction of nearly 30% in the weight of water droplets as compared with an arrangement in which no copper wire was employed as a filler. Furthermore, by raising the fill ratio up to 8%, such an arrangement is capable of providing an 85% reduction in the water droplets. It should be noted that, from the viewpoint of flow resistance, an arrangement of such a metal wire with a fill ratio of 8% is equivalent to a reduction in the pipe diameter $\varphi$ from 5 mm to 4.8 mm. Thus, it can be said that such an arrangement involves only a very small resistance loss (pressure loss).

It should be noted that dry air employed in factories has a relative humidity of 6%, which is lower than that employed in this experiment. Accordingly, in a case in which the pipe 2 according to the embodiment is employed, such an arrangement allows the weight of water droplets to be further reduced.

In a case in which the metal wire 8 is configured to have a further reduced diameter, e.g., to have a diameter on the order of 20 μm, this provides the metal wire 8 with a further increased surface area per volume. Thus, such an arrangement is capable of sufficiently suppressing temperature variation and/or of suppressing condensation even if the metal wire 8 is provided with a fill ratio that is lower than 4%, e.g., with a low fill ratio that is equal to or higher than 1%. The metal wire 8 may be configured to have a further reduced diameter that is smaller than 20 μm. For example, the metal wire 8 may be configured to have a diameter on the order of 1 μm. As the diameter of the metal wire 8 becomes smaller, its surface area becomes larger, which is preferable. However, in practice, the metal wire 8 is preferably configured to have a diameter of 1 μm or more from the viewpoint of mechanical strength, cost, commercial availability, and the like.

In order to provide the effect of suppressing condensation and the effect of suppressing temperature variation, it is important to design the ratio of the surface area of the metal wire 8 with respect to the air volume stored in the pipe 2. Description will be made below regarding an example in which the pipe 2 is uniformly filled with a metal wire having a radius r with a fill ratio x [%]. In this example, the volume V of the metal wire per unit volume of air stored in the pipe 2 is represented by $V = 1 [m^3] \times x/100 = x/100 [m^3]$. Accordingly, the length L [m] of the metal wire is represented by $L = x/100 \div \pi r^2 = x/(100 \times \pi r^2)$ [m]. The surface area S[$m^2$] is represented by $L \times 2\pi r = x/(50r)$ [$m^2$]. Accordingly, the surface area of the metal wire per unit air volume is represented by the following Expression.

$$x/(50r)\ [m^2]\ /\ 1\ [m^3] = x/(50r)\ [m^{-1}]$$

Such an arrangement can be expected to provide the effect for suppressing condensation or the effect for suppressing temperature variation even in a case in which a metal wire having a diameter of 100 μm is provided as a filler with a fill ratio of 1%. That is to say, such a metal wire may preferably be provided as a filler such that the surface area of the metal wire per unit air volume is larger than $4 \times 10^2$ [$m^{-1}$].

Description has been made regarding the present invention with reference to the embodiments using specific terms. However, the above-described embodiments show only the mechanisms and applications of the present invention for exemplary purposes only, and are by no means intended to be interpreted restrictively. Rather, various modifications and various changes in the layout can be made without departing from the spirit and scope of the present invention defined in appended claims.

Description has been made in the embodiment regarding an arrangement in which a portion of the interior space of the pipe 2 is filled with the metal wire 8. However, a space to be filled with the metal wire 8 is not restricted to such an arrangement. Rather, the metal wire 8 may preferably be provided as a filler to a portion to be configured to suppress temperature variation or to suppress condensation. That is to say, the present invention is applicable to a pneumatic actuator in addition to such a pipe. Such a pneumatic actuator includes a cylinder and a piston. In a case in which the pneumatic actuator has the potential to have a problem of temperature variation or a problem of condensation in the interior space of the cylinder, such a pneumatic actuator may further include a metal wire as a filler provided to an interior space of the cylinder

Description has been made in the embodiment regarding an arrangement in which the metal wire 8 is provided as a filler. Also, a metal material (porous metal material) having a porous structure may be employed as a filler instead of or in addition to such a metal wire 8. Such a porous metal material has an advantage of providing an increased surface area ratio with respect to the volume, as with the metal wire. Thus, such an arrangement provides an advantage of suppressing temperature variation and suppressing condensation with a small pressure loss tradeoff.

Description has been made in the embodiment and the modifications thereof regarding an arrangement in which a metal wire or a porous metal material is employed as a filler. Also, a carbon-based material having high thermal conductivity such as a graphite material may be employed as a filler instead of such a metal material.

[DESCRIPTION OF THE REFERENCE NUMERALS]

2 pipe, 4 pipe interior space, 6 portion, 10 pneumatic system, 12 electromagnetic valve, 14 pneumatic actuator.

[INDUSTRIAL APPLICABILITY]

The present invention is applicable to an pneumatic system.

## Claims

1. A pipe employed in a pneumatic system, structured such that at least a portion of an interior space thereof is filled with a wire-shaped metal material or a porous metal material.

2. The pipe according to Claim 1, wherein a surface area of the metal material per unit volume of air is larger than $4 \times 10^2$ [$m^{-1}$].

3. The pipe according to Claim 1 or 2, wherein the wire-shaped metal material has a diameter of 100 $\mu$m or less.

4. The pipe according to any one of Claims 1 through 3, wherein the aforementioned portion of the interior space of the pipe corresponds to an end of the pipe.

5. The pipe according to any one of Claims 1 through 3, wherein the aforementioned portion of the interior space of the pipe corresponds to a portion at which large pressure variation occurs.

6. The pipe according to any one of Claims 1 through 3, wherein the aforementioned portion of the interior space of the pipe is filled with the wire-shaped metal material or the porous metal material with a fill ratio of 1% or more.

7. A pneumatic actuator employed in a pneumatic system comprising a cylinder filled with a wire-shaped metal material or a porous metal material.

FIG. 1

4
8
6
2

FIG. 2

A
4
8
B
12
2
14

FIG. 3A
WITH METAL WIRE
FIG. 3B
WITH NO METAL WIRE
Temperature [°C]
Absolute pressure [kPa]
Time [ms]
pressure
Temperature

FIG. 4

TMIN
WITH NO METAL WIRE
TMIN
WITH METAL WIRE
1.E+02
1.E+00
1.E-02
1.E-04
1.E-06
1.E-08
1.E-10
1.E-12
amount of saturated water vapor [g/m3]
-150
-100
-50
0
50
Temperature [°C]

FIG. 5A

| FILL RATIO OF COPPER WIRE [%] | WEIGHT OF WATER DROPLETS [mg] |
|---|---|
| 0 | 7 |
| 4 | 5 |
| 6 | 4 |
| 8 | 1 |

FIG. 5B

WEIGHT OF WATER DROPLETS [mg]
8
7
6
5
4
3
2
1
0
0
2
4
6
8
10
FILL RATIO [%]

## INTERNATIONAL SEARCH REPORT

International application No. PCT/JP2015/073528

A. CLASSIFICATION OF SUBJECT MATTER
*F15B11/06*(2006.01)i, *F15B15/14*(2006.01)i, *F16L55/00*(2006.01)i

According to International Patent Classification (IPC) or to both national classification and IPC

B. FIELDS SEARCHED

Minimum documentation searched (classification system followed by classification symbols)
F15B11/06, F15B15/14, F16L55/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | Microfilm of the specification and drawings annexed to the request of Japanese Utility Model Application No. 043799/1986(Laid-open No. 155292/1987)<br>(Shimadzu Corp.),<br>02 October 1987 (02.10.1987),<br>specification, page 1, lines 11 to 13; page 2, line 10 to page 4, line 5; fig. 1 to 3<br>(Family: none) | 1-3,6<br>4-5,7 |
| A | JP 51-035548 Y1 (Yutaka Sangyo Kabushiki Kaisha),<br>01 September 1976 (01.09.1976),<br>column 1, line 19 to column 2, line 29; fig. 1 to 4<br>(Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 October 2015 (30.10.15) | 10 November 2015 (10.11.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/073528

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-274405 A (Kiyoshi TAKAURA), 03 October 2000 (03.10.2000), paragraphs [0026], [0029]; fig. 1, 5 (Family: none) | 1-7 |
| A | US 2005/0051382 A1 (BORGMEIER, Olav), 10 March 2005 (10.03.2005), paragraphs [0013] to [0016]; fig. 1 & EP 1515076 A1 & DE 203014134 U1 | 1-7 |

Form PCT/ISA/210 (continuation of second sheet) (July 2009)